# EUROPEAN PATENT APPLICATION

(11) **EP 1 503 536 A1**
(43) Date of publication of application: **02.02.2005**
(21) Application number: 03723195.8
(22) Date of filing: 24.04.2003
(51) Int. Cl.: H04L 9/14, H04L 9/10, H04L 12/22, H04L 12/46

(54) **ENCRYPTION DEVICE, ENCRYPTION METHOD, AND ENCRYPTION SYSTEM**

(30) Priority: 09.05.2002 JP 2002134680
(71) Applicant: Niigata Seimitsu Co., Ltd., Jyoetsu-shi, Niigata 943-0834 (JP); Micro Research Laboratory, Inc., Tokyo 140-0004 (JP)
(72) Inventor: IZAWA, Makoto, Micro Research Laboratory, Inc., Tokyo 140-0004 (JP); NARITA, Hiromitsu, Micro Research laboratory, Inc., Tokyo 140-0004 (JP); OKAMOTO, Akira, Ageo-shi, Saitama 362-0015 (JP)
(74) Representative: VOSSIUS & PARTNER
(86) International application number: PCT/JP2003/005265
(87) International publication number: WO 2003/096612

(57) **Abstract**

An encryption apparatus 1 for performing an encrypting process and an encrypted data decrypting process is mounted to terminate the security by encryption between personal computers 7 to 9 on which encryption software is installed. For example, by connecting the apparatus between terminals 2 to 4 and the personal computers 7 to 9, the encryption can be used in an in-house LAN having the terminals 2 to 4 on which encryption software cannot be installed. Thus, a secure network 10 almost free of the risk of tapping of the confidential information in the LAN by an external unauthorized entry or attach can be successfully designed.

## Description

### FIELD OF THE INVENTION

The present invention relates to an encryption apparatus, an encryption method and an encryption system. In particular, this invention relates to an apparatus, a method and a system for encrypting/decrypting information to reduce risks of interception of information, change of information and the like that might be caused by attacks on networks from the outside.

### BACKGROUND OF THE INVENTION

When a PC (personal computer) is used as a stand-alone system, there are small risks of interception, change and destruction of information on the PC. However, on a network system like the Internet, information to be transmitted is routed through a number of networks. Therefore, once the PC is connected to such a network system, the risks of interception, change and the like can be largely increased during information communications.

One of systems for solving the above-mentioned problem is an information encryption system. In this system, information to be transmitted is first encrypted at a transmission PC, and then the transmission PC transmits the encrypted data to a destination PC. The destination PC receives and decrypts the encrypted data to use it appropriately. According to the system, since information to be transmitted is encrypted in advance, the risk of disclosure of information can be reduced even when the information is intercepted in the course of traveling on the network toward the destination PC. Further, by the encryption, the risk of change of the information can also be reduced.

However, if trying to realize an encryption system as described above, it is necessary to install a dedicated encryption program (encryption software program) to all terminals involved in the encrypted data communications. Now, it is to be noted that, actually, examples of networks formed of various terminals include LANs (local area networks) in companies as well as the Internet. Generally, each of such LANs include:
(A) Terminals (e.g., a printer, a facsimile and the like) where installation of an encryption program is impossible for the reason of its design and structure;
(B) Terminals (e.g., a print server, a database server, and the like) where excessive installation of software programs is not preferred in view of stable operations; and
(C) Terminals that function simply as network terminals and that have no operating system.
Therefore, it has generally been very difficult to use an encryption system in the LANs of various companies.

Actually, a number of LANs are connected to the Internet so that PCs of the LANs can access the Internet from the inside of the LANs to perform data communicates. However, once the LANs are connected to the Internet, there are the risks of interception and change of confidential information inside the LANs by unauthorized entries and attacks from the outside.

To successfully prevent someone who has no authorization from entering (accessing) LANs, a firewall system is generally used. When installing the firewall system, a server having a software program for the firewall system is prepared, and the server is provided between the Internet and a LAN. However, there is a case that networks have security holes therein, even when the firewall system has been installed. Through such security holes in the networks, a number of unauthorized accesses can be made from the outside of the networks. Therefore, a firewall system as described above has a problem in that non-encrypted information in the networks can be easily intercepted and changed, once an unauthorized access has been made through a security hole.

Conventionally, there have been routers for routing and relaying data that travels on the Internet, and some types of such routers have an encrypting capability. For example, a VPN (Virtual Private Network) router is provided as such a router having encrypting capability. This type of router makes it possible to perform encrypted-data communications between VPN routes, without installing a dedicated encryption program onto the transmitting and destination terminals.

However, the VPN router is designed as a relaying device on virtual private networks, and is actually used for connecting a plurality of LANs via the Internet. Therefore, there has been a problem in that although information to be communicated among the LANs can travel in the form of encrypted state on the Internet (i.e., outside the LAN), it cannot travel in the form of the encrypted state inside the LANs.

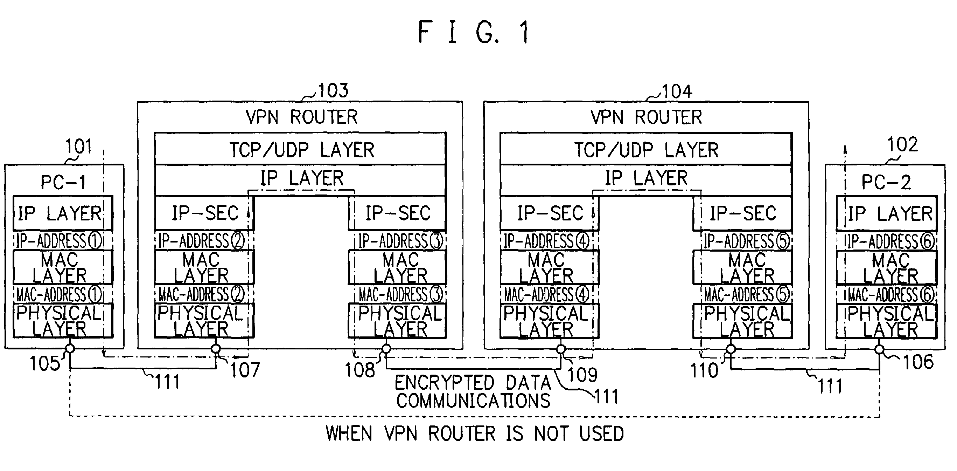

To encrypt data on a VPN router, it is necessary for the router to have an IP address for data communications as described below by referring to FIG. 1. FIG. 1 shows a hierarchical structure of the protocol used for the conventional VPN router and the PC (personal computer) connected to the router.

As shown in FIG. 1, two PCs 101 and 102 have ports 105 and 106, respectively, so that they can perform data communications with each other. Further, each of VPN routers 103 and 104 is designed as a relaying apparatus, and has two ports 107 and 108 (109 and 110). Each of the ports 107 and 108 of the VPN router 103 is provided with an IP-Sec, a MAC layer (data link layer) and a physical layer of the OSI reference model. In addition, an IP layer (network layer) and a TCP/UDP layer (transport layer) are assigned to the ports 107 and 108 as common layers, so that the IP and TCP/UDP layers are commonly used by the ports 107 and 108. In the same manner, the ports 109 and 110 of the VPN router 104 are provided with a plurality of layers.

In this hierarchical structure of the protocol, the lower layer is farther from a user, and the higher layer is closer to the user. In each of the PCs 101 and 102, the TCP/UDP layer and the application layer (not shown in the drawings) are above the IP layer, and they are used for communications between a user application and lower layers.

When data is transmitted from a transmission end to a reception end, data is first converted on the transmission end, each time the data passes each layer from an upper layer to a lower layer. In addition, each time the data passes each layer, header information for enabling data exchange between the same level layers is added to the data. On the other hand, on the reception end, each layer refers to the header information addressed to its layer, and extracts necessary data. Then, the extracted data is passed to upper layers, and finally delivered to the user through the application layer.

In the following, functions of each of the layers will be described. The TCP/UDP layer is used in: determining an application to which data is passed; managing conditions of data packets; and achieving other operation. On the data transmission end, data is passed from the upper layer (application layer), and then it determines an application to which the data is passed at the reception end. After the determination, a destination port number is added to the data, and then the data is passed to the lower layer (network layer). On the other hand, on the data reception end, data packets passed from the lower layer are monitored to judge that whether or not there is a missing packet due to the communications condition and the like.

The IP layer is used in managing and controlling data retransmission (relay) performed between terminals over a plurality of networks. The PC (transmission end) 101 and the PC (reception end) 102 are assigned different IP addresses <1> and <6>, respectively, to define their respective addresses. Thus, the end-to-end type of logical communications path is established. For the VPN router 103 (104) having the two ports 107 and 108 (109 and 110), different IP addresses are assigned to the ports 107 - 110, respectively.

The MAC (media access control) layer is used in ensuring reliable data transmission between adjacent nodes (devices). To the MAC layer on each device, a physical MAC address is assigned when manufacturing the device. On the transmission end, an IP address of the reception end is read out in the IP layer. Then, based on the read out IP address of the reception end, the MAC layer determines a next relaying point (i.e., one of adjacent nodes that are physically connected to the transmission end) to which the data is to be sent. In addition, it finds out an IP address of the next relaying point. On the other hand, on the reception end, it is judged based on the MAC address that whether or not the received data packet is addressed to its own end. When judged that it is addressed to the reception end, the IP address is further analyzed in the IP layer above the MAC layer. Then, according to the analyzation result, it is determined that whether the data packet is to be further routed to another node, or to be stored therein.

A physical layer is used in: converting data received from upper layers into a signal such as an electric signal and an optical signal; transmitting the data signal through a transmission line 111 such as a coaxial cable and an optical fiber cable; converting the data signal transmitted through the transmission line 111 into the data recognizable by upper layers; and passing the data to upper layers. In the MAC layer above the physical layer, the above-mentioned process is performed in a manner depending on the communications interface of the physical layer.

The IP-Sec has a function of performing an encrypting process and a decrypting process on data. According to the function, the encrypting/decrypting process is performed on data passed from the MAC layer.

When the encrypted data communications are established between the PCs 101 and 102 using the VPN routers 103 and 104 that utilize the above-mentioned hierarchical structure, for example, the VPN router 103 receives via the first port 107 data packets transmitted from the transmission PC 101 to the destination PC 102. At the VPN router 103, the received data packets are sequentially passed to the IP layer, and then at this layer, each data packet is divided into a header information part and a data part. At this time, the obtained data part is encrypted in the IP-Sec. Then, based on a destination IP address contained in the header information of each data packet, the VPN router 103 determines a next node to which the data is to be readdressed. This determination is made according to a routing table that the VPN router 103 has therein. Then, the VPN router 103 reproduces the data packets each of which includes a set of the encrypted data part and a header information part, and passes them from the IP layer to the physical layer. Finally, the VPN router 103 retransmits (relays) them via the second port 108.

The encrypted packets (i.e., the data packets each of which includes the encrypted data part as well as the header information part) outputted from the second port 108 of the VPN router 103 are received at the first port 109 of the VPN router 104. The VPN router 104 sequentially passes the received encrypted packets to the IP layer through the below layers, and then at this layer, each encrypted packet is divided into the header information part and the encrypted data part. At this time, the encrypted data part is decrypted in the IP-Sec. Then, based on a destination IP address contained in the header information of each encrypted data packet, the VPN router 104 determines a next node to which the data is to be readdressed. This determination is made according to a routing table that the VPN router 104 has therein. Then, the VPN router 104 reproduces the data packets each of which includes a set of the decrypted data part and a header information part, and passes them to the physical layer from the IP layer. Finally, the VPN router 104 retransmits (relays) them via the second port 110.

The data packets outputted from the second port 110 of the VPN router 104 is received by the PC 102. The received data packets are sequentially passed to an upper layer through the physical layer, the MAC layer and the IP layer. In the upper layer, each of the data packets is divided into the header information part and the data part. Finally, the data is delivered to the user through the application layer (not shown). The above-mentioned manner makes it possible for the PCs 101 and 102 to perform encrypted data communications on a network between the VPN routers 103 and 104, in spite of the fact that the PCs 101 and 102 have no encryption software program.

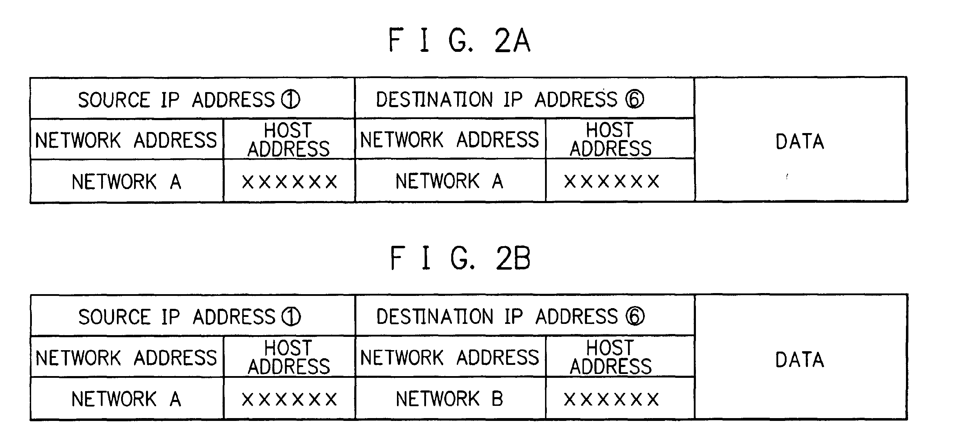

In the case of the system shown in FIG. 2, the VPN routers 103 and 104 are provided between different networks (i.e., a network A including the PC 101 and a network B including the PC 102), and these networks connected to the VPN routers form a part of the Internet. In this network structure, a unique network address has to be assigned to each network. Therefore, it is also necessary for each of the VPN routers 103 and 104 to have a unique IP address, so that routing between different networks can be performed. (The routing operation includes operations of determining a packet transmission route, discarding data packets if necessary, dividing/reproducing a data packet.) However, such an address setting operation is complicated, and therefore the VPN router has a problem in that point.

In each of the VPN routers 103 and 104, the network connected to the first port 107 (109) is generally different from the network connected to the second port 108 (110). Therefore, IP addresses assigned to the ports of the VPN router have to be different from each other. In other words, the input and output ports of the VPN routers 103 and 104 have to have a different IP address, respectively. For the reason described above, when a VPN router is provided between terminals on a network, it is necessary not only to set a predetermined address onto the VPN router, but also to change an address setting of each terminal that is to be connected to the VPN router. In addition, the above-mentioned address setting operation also has to be conducted when a VPN router is removed from a network. Therefore, the VPN router also has a problem in requiring complicated setting operations when it uses.

For example, in the case where the PCs the 101 and 102 are connected without using the VPN routers 103 and 104, the PCs 101 and 102 are on the same network. Therefore, when performing data communications in this case, the PCs the 101 and 102 can exchange data therebetween, directly. FIG. 2A shows IP addresses of a data packet in this case (i.e., in the case of transmitting data from the PC 101 to the PC 102 in end-to-end manner). As is apparent from FIG. 2A, in this case, the setting of the IP addresses <1> and <6> of the transmission and reception PCs 101 and 102 is completed simply by setting the network addresses thereof at the same address "A".

On contrast with this, FIG. 2B shows an IP address of a data packet in the case of providing the VPN routers 103 and 104 between the PCs 101 and 102. In this case, the PCs 101 and 102 are on different networks, respectively. Therefore, when completing the setting of the IP addresses <1> and <6> of the PCs 101 and 102 in this case, it is necessary to set the network addresses of the PCs 101 and 102 at the different addresses "A" and "B", respectively.

Accordingly, networks to which the PCs 101 and 102 belong change, depending on whether or not the VPN routers 103 and 104 are provided between the PCs 101 and 102, and depending on whether or not the connected VPN routers 103 and 104 are removed. Therefore, when providing (or removing) the VPN routers 103 and 104, it is necessary to change and complete settings such as:
(i) An address setting of a default gateway for the PCs 101 and 102 (i.e., a destination IP address setting (the ports 107 and 110 of the VPN routers 103 and 104) which is required when performing data communications with a different network); and
(ii)An IP address setting of either PC 101 or 102.

As described above, it is difficult for a conventional VPN router to maintain its transparency regardless of the connection and removal thereof. In addition, a conventional VPN router requires a laborious operation when designing and maintaining a system the router belongs.

In view of the above, it is an object of the present invention to allow an in-house LAN having terminals where installation of a dedicated encryption program is impossible to utilize encryption for data communications inside the LAN, so that risks of interception and change of confidential information inside the LAN by unauthorized entries and attacks form the outside are reduced.

Further, it is another object of the present invention to allow terminals inside an in-house LAN to perform encrypted data communications without any laborious operations such as an address setting operation.

### SUMMARY OF THE INVENTION

In order to achieve the above objects, the present invention is directed to an encryption apparatus, comprising:
a plurality of ports to at least one of which a terminal having an encrypting capability can be directly or indirectly connected;
encryption/decryption means for performing an encrypting process and a decrypting process on data to terminate encryption-based security between the terminal having the encrypting capability; and
bridge means for allowing data, which has been received with one of the plurality of ports and then on which the encrypting or decrypting process has been performed, to be outputted as it is from another port without being performed any routing process.

In another aspect of the present invention, the encryption/decryption means performs the encrypting process and the decrypting process on data, so that the encryption apparatus receives and retransmits data in the form of encrypted data from and to the terminal having the encrypting capability,andthe encryption apparatus receives and retransmits the data in the form of non-encrypted data from and to the terminal having no encrypting capability.

Further, in order to achieve the above objects, the present invention is also directed to an encryption apparatus, comprising:
a plurality of ports to at least one of which a terminal having an encrypting capability can be directly or indirectly connected;
encryption/decryption means for performing an encrypting process or a decrypting process on data which has been received with one of the plurality of ports and then has passed through a physical layer and a data link layer; and
bridge means for passing the encrypted or decrypted data to the data link layer and the physical layer without passing said data to a network layer in which routing between networks is controlled, and then sending said data to another port so as to be outputted from said port.

In another aspect of the present invention, the encryption apparatus further comprises setting information storage means for storing setting information for controlling the encrypting process and the decrypting process,
wherein the encryption/decryption means controls the encrypting process and the decrypting process by comparing the setting information stored in the setting information storage means with header information of a data packet of the data received with one of the plurality of ports.

Further, in order to achieve the above objects, the present invention is also directed to an encrypting method for performing an encrypting process and a decrypting process using an encryption apparatus, the apparatus having a plurality of ports to at least one of which a terminal having an encrypting capability can be directly or indirectly connected, the method comprising the steps of:
performing the encrypting or decrypting process on data which has been received with one of the plurality of ports and then has passed through a data link layer and a physical layer; and
outputting the encrypted or decrypted data from another port through the data link layer and the physical layer, without passing said data to a network layer in which routing between networks is controlled.

Further, in order to achieve the above objects, the present invention is also directed to an encryption system, comprising:
an encryption apparatus according to claim 1; and
a terminal having an encrypting capability which can be connected to the encryption apparatus through a wireless or cable network.

Further, in order to achieve the above objects, the present invention is also directed to an encryption system, comprising:
a terminal having an encrypting capability;
a terminal having no encrypting capability; and
an encryption apparatus according to claim 2 which can be connected between the terminal having the encrypting capability and the terminal having no encrypting capability through a wireless or cable network.

### BRIEF DESCRIPTION OF THE DRAWINGS

FIG. 1 shows hierarchical structures for protocols on a conventional VPN router and two personal computers connected thereto;
FIG. 2 shows a data structure of a data packet traveling on a network that uses a conventional system, which is referred to in describing IP addresses therein;
FIG. 3 shows an example of a configuration of an encryption system to which an encryption apparatus according to the present invention is applied;
FIG. 4 shows another example of the configuration of the encryption system;
FIG. 5 shows another example of the configuration of the encryption system;
FIG. 6 shows another example of the configuration of the encryption system;
FIG. 7 shows hierarchical structures for protocols on the encryption apparatus according to the present invention, a DB server and a personal computer both of which are connected to the encryption apparatus;
FIG. 8 shows a data structure of a data packet traveling on a network that uses the present invention, which is referred to in describing IP addresses therein;
FIG. 9 shows a data structure of a data packet traveling on the encryption apparatus according to the present invention, which is referred to in describing MAC addresses therein; and
FIG. 10 shows a data structure of a data packet traveling on a conventional VPN router, which is referred to in describing MAC addresses therein.

### PREFERRED EMBODIMENTS OF THE INVBNTION

An embodiment according to the present invention will be described below by referring to the attached drawings.

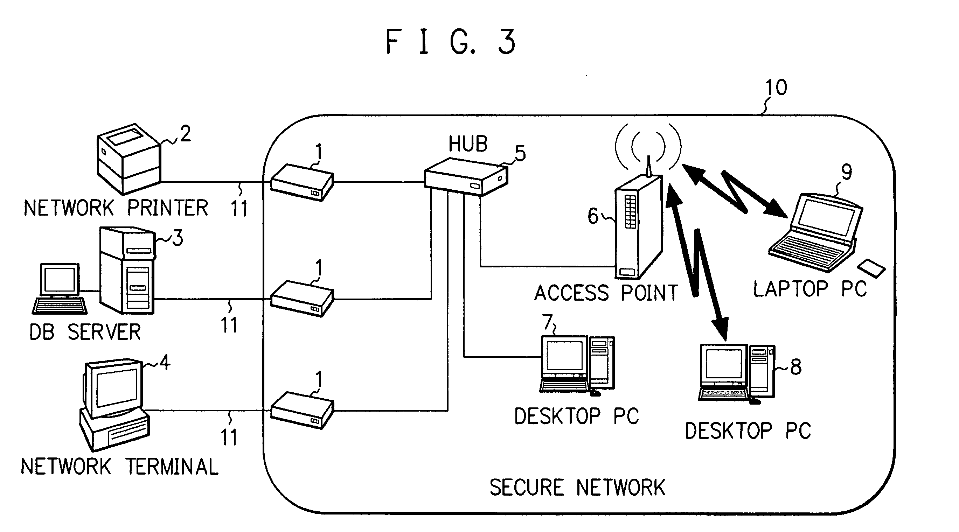

FIG. 3 shows an example of the entire configuration of an encryption system where an encryption apparatus of this embodiment is used.

In FIG. 3, each of encryption apparatuses 1 of this embodiment has two ports. To one of the ports, a terminal (device) such as a network printer 2, a DB server 3 and a network terminal 4 is connected. To the other port, a hub 5 is connected. Each of the encryption apparatuses 1 is provided between the hub 5 and the terminal (i.e., the network printer 2, the DB server 3, or the network terminal 4), and relays data that is to be communicated therebetween.

The network printer 2 is a terminal onto which an encryption program (encryption software program) cannot be installed for the physical reasons such as its structure, design and the like. The DB server 3 is a terminal onto which the encryption program can be installed, but it is not prefer to install such a program thereon in view of stable operations and the like. The network terminal 4 is a terminal which is provided with no operating system, and thus it is impossible to operate the encryption program on the terminal. Therefore, the following description will be given on the assumption that no encryption program is provided onto these terminals 2 - 4.

The hub 5 is a device for relaying data in the physical layer of the OSI reference model. An access point 6 for wireless communications and a desktop PC (personal computer) 7 as well as the encryption apparatus 1 are connected to the hub 5. According to the configuration described above, the hub 5 in this example relays data among the encryption apparatus 1, the access point 6 and the desktop PC 7.

By wireless, a desktop PC 8 and a laptop PC 9 are connected to the access point 6. The above-mentioned PCs 7 - 9 are designed as to be able to store and operate an encryption program for encrypting/decrypting data, so that the encryption program can be installed thereon. In the following, the description will be given on the assumption that such an encryption program has already been installed onto the PCs 7 - 9.

As described above, each encryption apparatus 1 of this embodiment has two ports, and to one of the ports the PCs 7 - 9 having an encrypting capability are indirectly connected via the hub 5 (and the access point 6 in the case of the PCs 8 and 9). Further, to the other of ports, the terminal (i.e., the network printer 2, the DB server 3, or the network terminal 4) is directly connected. In this embodiment, the encryption apparatus 1, the network printer 2, the DB server 3, the network terminal 4, the hub 5, the access point 6 and the PCs 7 - 9 constitute a LAN (local area network).

In the LAN having a structure described above, data communications are made between:
(i) The terminals onto which NO encryption program is installed (i.e., the network printer 2, the DB server 3 and the network terminal 4); and
(ii)The terminals onto which the encryption program has been installed (i.e., the PCs 7 - 9),
via the encryption apparatus 1, the hub 5 and the access point 6. (In this connection, it should be noted that each of the terminals 2 - 4 and 7 - 9 corresponds to a terminal of the claimed invention.)

When performing data communications within the LAN in FIG. 3, each encryption apparatus 1 receives/retransmits data in the form of encrypted data from/to the PCs 7 - 9 having the encryption program. In addition, each encryption apparatus 1 performs the encrypting process and the decrypting process on data during the data communications, so that the encryption apparatuses 1 receives/retransmits data in the form of non-encrypted data from/to their respective terminals 2 - 4 having NO encryption program.

For example, when data is to be transmitted from the desktop PC 7 to the network printer 2 to print out the data, the data is first encrypted on the desktop PC 7 using the installed encryption program. Then, the desktop PC 7 sends the encrypted data to the encryption apparatus 1 via the hub 5. The encryption apparatus 1 receives and decrypts the encrypted data, and then retransmits (relays) the decrypted data to the network printer 2.

Further, when the data managed by the DB server 3 is to be downloaded from the laptop PC 9, the laptop PC 9 first sends a data transmission request to the DB server 3. In response to the request from the laptop PC 9, the DB server 3 sends the requested data in the form of NON-encrypted data to the encryption apparatus 1. The encryption apparatus 1 receives the non-encrypted data, and then encrypts the received data. Then, the encryption apparatus 1 retransmits the encrypted data to the laptop PC 9 via the hub 5 and the access point 6. Finally, the laptop PC 9 receives and decrypts the encrypted data, so that the requested data can be processed appropriately for a desired purpose on the laptop PC 9.

As described above in detail, the encryption apparatus 1 of this embodiment can be applied to a LAN (in particular, an in-house LAN) including terminals such as the terminals 2 - 4 where installation of a dedicated encryption program is impossible. Thus, when the encryption apparatus 1 is used in such a LAN, it becomes possible to perform encrypted-data communications even within the above-mentioned LAN including the terminals 2 - 4 where installation of a dedicated encryption program is impossible. Therefore, use of the encryption apparatus 1 of this invention makes it possible to realize a secure network 10, where risks of interception and change of confidential information inside the LAN are small, even when someone who unauthorized enters and attacks the network from the outside.

In this connection, it should be noted that although the encryption cannot be used between the encryption apparatuses 1 and their respective terminals 2 - 4, no security problems occur therebetween. This is because cables 11 connecting the encryption apparatuses 1 to the terminals 2 - 4 are physically short, and therefore there is smallest possibility that data is intercepted and changed by the attack from these short cables 11.

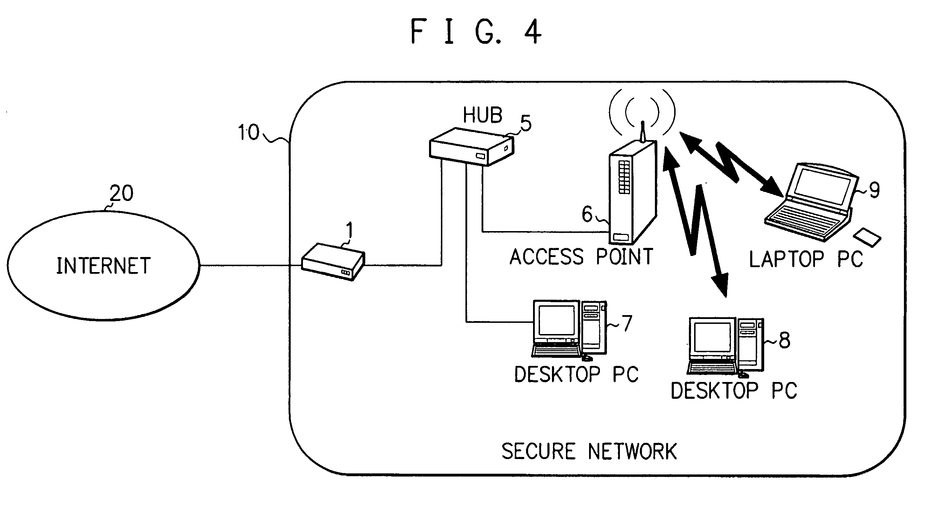

FIG. 4 shows another example of the configuration of the encryption system to which the encryption apparatus of this embodiment is applied. In FIG. 4, an apparatus having the same function as that shown in FIG. 3 is assigned the same reference numeral. As shown in FIG. 4, the encryption apparatus 1 of this example is connected to Internet 20 via one of the ports thereof, and is also connected to the hub 5 via the other port.

In the example shown in FIG. 4, the encryption apparatus 1, the hub 5, the access point 6 and the PCs 7 - 9 configure a LAN connected to the Internet 20. At the outside of the LAN, another plurality of terminals (not shown) are also connected to the Internet 20. Of course, such a plurality of terminals connected to the Internet 20 at the outside of the LAN include terminals where installation of an encryption program is impossible (i.e., terminals like the network printer 2, the DB server 3 and the network terminal 4); and/or terminals where an encryption program has been installed (i.e., terminals like the PCs 7 - 9). These terminals configure another LAN different from the secure network (LAN) 10.

In the example shown in FIG. 3, the terminal is connected to the encryption apparatus 1, one by one, and the encrypting/decrypting process for one terminal is performed dedicatedly by one encryption apparatus 1. That is, the encryption apparatus 1 shown in FIG. 3 is connected between the terminal having no encryption program and a group of the PCs 7 - 9 where the encryption program has been installed. In this system, the encryption apparatus 1 terminates the encryption-based security (i.e., the security which utilizes encryption technology) with respect to the one terminal.

On contrast with this, in the example shown in FIG. 4, the encryption apparatus 1 is provided between a group of the plurality of terminals (not shown) outside the secure network 10 and a group of the PCs 7 - 9 onto which the encryption program has been installed. (The outside terminals are connected to the secure network 10 via the Internet 20.) The above-mentioned plurality of terminals outside the secure network 10 may be provided with NO encryption program in the same manner as the network printer 2, the DB server 3 and the network terminal 4 shown in FIG. 3. Alternatively, these terminals may also be provided with an encryption program in the same manner as the PCs 7 - 9. Accordingly, the single encryption apparatus 1 of this example is designed so as to be able to terminate the encryption-based security with respect to a plurality of terminals. In this case, the encryption apparatus 1 has to have data paths for the respective connected terminals, and performs the encrypting/decrypting process using different encryption keys for the respective terminals.

For example, when data is to be transmitted via the Internet 20 from the desktop PC 7 inside the secure network 10 to an outside terminal (which is connected to the Internet 20 at the outside of the secure network 10) having NO encryption program, the data is first encrypted on the desktop PC 7 using the installed encryption program. Then, the desktop PC 7 sends the encrypted data to the encryption apparatus 1 via the hub 5. The encryption apparatus 1 receives the encrypted data and decrypts the received encrypted data, and then retransmits (relays) the decrypted data to the outside terminal via the Internet 20.

Further, for example, when data managed by an outside terminal having NO encryption program is to be downloaded from the laptop PC 9 inside the secure network 10, the laptop PC 9 first sends a data transmission request to the outside terminal. In response to the request, the outside terminal transmits the requested data in the form of non-encrypted data via the Internet 20. Then, the encryption apparatus 1 receives and encrypts the requested data, and then retransmits (relays) the requested data in the form of encrypted data to the laptop PC 9 via the hub 5 and the access point 6. Finally, the laptop PC 9 receives and decrypts the encrypted data, so that the requested data can be processed appropriately for a desired purpose on the laptop PC 9.

Furthermore, when data is to be transmitted from the desktop PC 7 inside the secure network 10 to an outside terminal having an encryption program, the data is first encrypted on the desktop PC 7 using the installed encryption program. Then, the desktop PC 7 sends the encrypted data to the encryption apparatus 1 via the hub 5. As soon as the encryption apparatus 1 receives the encrypted data, it retransmits (relays) the received data without any decryption to the outside terminal via the Internet 20. Finally, the outside terminal decrypts the received data, so that the requested data can be processed appropriately for a desired purpose on the outside terminal.

Conversely, when encrypted data on the outside terminal outside of the secure network 10 is to be transmitted via the Internet 20 to the desktop PC 7 inside the secure network 10, similarly the encryption apparatus 1 relays the data in the form of encrypted data to the desktop PC 7 via the hub 5, without decrypting the data received from the outside terminal via the Internet 20.

Thus, even in the case where data communications are performed between any of the PCs 7 - 9 inside the secure network 10 and the outside terminal (which is connected to the Internet 20 at the outside of the secure network 10) with NO encryption program, the encryption-based security at least inside the secure network 10 can be maintained. Of course, when the outside terminal has an encryption program, the encryption can be utilized in data communications not only inside the secure network 10, but also on the Internet 20 outside the secure network 10.

Now, in the examples described above, the plurality of terminals are connected to the secure network 10 via the Internet 20, but a manner of the connection is not limited to these examples. For example, the plurality of terminals may be connected directly to the encryption apparatus 1 or connected via a hub. In this connection, when connecting directly, the encryption apparatus 1 has to have at least two ports.

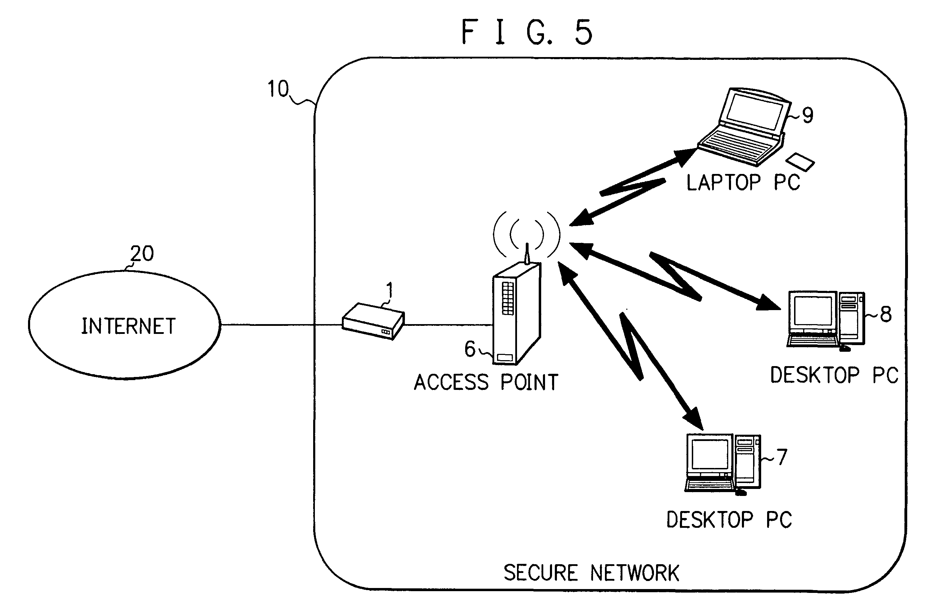

FIG. 5 shows another example of the configuration of the encryption system to which the encryption apparatus of this embodiment is applied. In FIG. 5, a terminal having the same function as that shown in FIG. 3 is assigned the same reference numeral. Similar to the example shown in FIG. 4, the example in FIG. 5 is also directed to a case of the encryption apparatus 1 terminating the encryption-based security with respect to a plurality of terminals.

In the example of the secure network 10 shown in FIG. 5, all of the PCs 7 - 9 are connected to the access point 6 so as to form a wireless LAN. Further, the access point 6 is connected to the Internet 20 via the encryption apparatus 1.

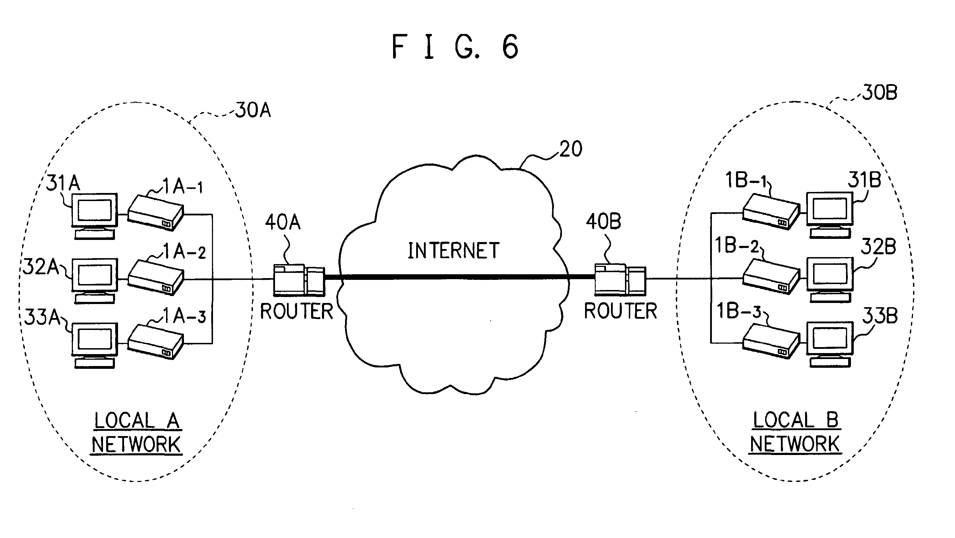

FIG. 6 shows another example of the configuration of the encryption system to which the encryption apparatus of this embodiment is applied. In the above, with referring to FIGS. 3 - 5, the PCs 7 - 9 having an encryption program were described as examples of a terminal having the encrypting capability. Further, the termination of the security between the encryption apparatus 1 and a group of the PCs 7 - 9 was described as an example of the termination using a terminal with an encrypting capability. However, a terminal with encrypting capability which can be used in this invention is not limited to these examples. Namely, examples of such a terminal include other encryption apparatuses having a capability similar to that of the encryption apparatus 1. One of such examples is shown in FIG. 6.

In the example shown in FIG. 6, a LAN 30A at a local area A and a LAN 30B at a local area B are connected with routers 40A and 40B via the Internet 20. The LAN 30A at local area A is designed as an in-house LAN including PCs 31A - 33A and encryption apparatuses 1A₋₁ - 1A₋₃. In the LAN 30A, each of the PCs 31A - 33A corresponds to a terminal having NO encryption program. Further, each of the encryption apparatuses 1A₋₁ - 1A₋₃ has the same function as that of the encryption apparatus 1 shown in FIG. 3. To one of ports of each of the encryption apparatuses 1A₋₁ - 1A₋₃, the router 40A is connected. To the other ports of the encryption apparatuses 1A₋₁ - 1A₋₃, the PCs 31A - 33A are connected, respectively.

Similarly, the LAN 30B at local area B is also designed as an in-house LAN including PCs 31B - 33B and encryption apparatuses 1B₋₁ - 1B₋₃. In the LAN 30B, each of the PCs 31B - 33B corresponds to a terminal having NO encryption program. Further, each of the encryption apparatuses 1B₋₁ - 1B₋₃ has the same function as that of the encryption apparatus 1 shown in FIG. 3. To one of ports of each of the encryption apparatuses 1B₋₁ - 1B₋₃, the router 40B is connected. To the other ports of the encryption apparatuses 1B₋₁ - 1B₋₃, the PCs 31B - 33B are connected, respectively.

With the above-mentioned network structure, when data communications are preformed among the PCs belonging to the different LANs 30A and 30B, data is transmitted/received via the encryption apparatuses 1A₋₁ - 1A₋₃ and 1B₋₁ - 1B₋₃. For example, when data is to be transmitted from the PC 31A in the LAN 30A to the PC 33B in the LAN 30B, the PC 31A first sends the data to the encryption apparatus 1A₋₁. The encryption apparatus 1A₋₁ receives and encrypts the data, and then retransmits (relays) the encrypted data to the encryption apparatus 1B₋₃ via the router 40A, the Internet 20 and the router 40B. The encryption apparatus 1B₋₃ receives and decrypts the encrypted data, and then further retransmits (relays) the decrypted data to the PC 33B. In this way, data communications utilizing the encryption can be achieved between the different LANs 30A and 30B.

Further, in this example, when data communications are performed inside the LAN 30A (i.e., among the PCs 31A - 33A having NO encryption program), data is transmitted/received via the encryption apparatuses 1A₋₁ - 1A₋₃. For example, when data is to be transmitted from the PC 31A to the PC 33A, the PC 31A first sends the data to the encryption apparatus 1A₋₁. The encryption apparatus 1A₋₁ receives and encrypts the data, and then retransmits (relays) the encrypted data to the encryption apparatus 1A₋₃. The encryption apparatus 1A₋₃ decrypts the received encrypted data, and then further retransmits (relays) the decrypted data to the PC 33A.

Similarly, when data communications are performed inside the LAN 30B (i.e., among the PCs 31B - 33B having NO encryption program), data is transmitted/received via the encryption apparatuses 1B₋₁ - 1B₋₃. For example, when data is to be transmitted from the PC 31B to the PC 33B, the PC 31B first sends the data to the encryption apparatus 1B₋₁. The encryption apparatus 1B₋₁ receives and encrypts the data, and then retransmits (relays) the encrypted data to the encryption apparatus 1B₋₃. The encryption apparatus 1B₋₃ decrypts the received encrypted data, and then further retransmits (relays) the decrypted data to the PC 33B.

As described above, in this example, the encryption apparatuses 1A₋₁ - 1A₋₃ and 1B₋₁ - 1B₋₃ receive/retransmit data in the form of NON-encrypted data from/to their respective PCs 31A - 33A and 31B - 33B having NO encryption program. On the other hand, the encryption apparatuses 1A₋₁ - 1A₋₃ and 1B₋₁ - 1B₋₃ perform the encrypting process and the decrypting process, so that any one of the encryption apparatuses 1A₋₁ - 1A₋₃ and 1B₋₁ - 1B₋₃ receives/retransmits data in the form of encrypted data from/to one of the other encryption apparatuses.

By connecting the above-mentioned encryption apparatuses 1A₋₁ - 1A₋₃ and 1B₋₁ - 1B₋₃ closer (directly) to the PCs 31A - 33A and 31B - 33B respectively, data communications using the encryption can be realized not only between different LANs 30A and 30B, but also inside an in-house LAN which includes PCs with NO encryption program. This makes it possible to configure each of the LANs 30A and 30B as a secure network almost free of the risks of interception and change of confidential information by unauthorized entries or attacks form the outside.

In the example shown in FIG. 6, each of the LANs 30A and 30B is provided with a plurality of terminals having the encrypting capability (i.e., the encryption apparatuses 1A₋₁ - 1A₋₃ and 1H₋₁ - 1B₋₃). However, this invention is not limited to this example, and it may be formed by providing at least one of the LANs 30A and 30B with only one terminal having the encrypting capability. For example, the LAN 30A may be formed from a single PC 31A and a single encryption apparatus 1A₋₁ connected to the PC 31A.

In this example, similar to the example shown in FIG. 6, data communications using the encryption can also be realized between the different LANs 30A and 30B. Further, when the encryption apparatus 1A₋₁ is connected closer to the PC 31A, the encryption can also be used in data transmission between an enter/exit point of the LAN 30A and the encryption apparatus 1A₋₁ inside the LAN 30A.

In the example shown in FIG. 6, two LANs 30A and 30B are connected via the Internet 20. Further, the LAN 30A is provided with the encryption apparatuses 1A₋₁ - 1A₋₃ and the PCs 31A - 33A, and the LAN 30B is provided with the encryption apparatuses 1B₋₁ - 1B₋₃ and the PCs 31B - 33B. However, it should be noted that configuration of this invention is not limited to this example.

For example, a single LAN may be provided with all of the encryption apparatuses 1A₋₁ - 1A₋₃ and 1B₋₁ - 1B₋₃ and the PCs 31A - 33A and 31B - 33B, so that data communications can be achieved inside the LAN among the PCs 31A - 33A and 31B - 33B having NO encryption program via the encryption apparatuses 1A₋₁ - 1A₋₃ and 1B₋₁ - 1B₋₃. In this case, at least among the encryption apparatuses 1A₋₁ - 1A₋₃ and 1B₋₁ - 1B₋₃ inside the single LAN, data communications using the encryption can be realized.

Further, for another example, a LAN may be designed so as to have the same arrangement as that shown in FIG. 3, except that the desktop PC 7 having the encryption program is changed to a set of a PC with no encryption program and the encryption apparatus 1 that is to be connected to the hub 5. In this example, encrypted-data communications can be achieved between the PC with no encryption program and one of the network printer 2, the DB server 3 and the network terminal 4, via their respective encryption apparatuses 1 connected closer thereto.

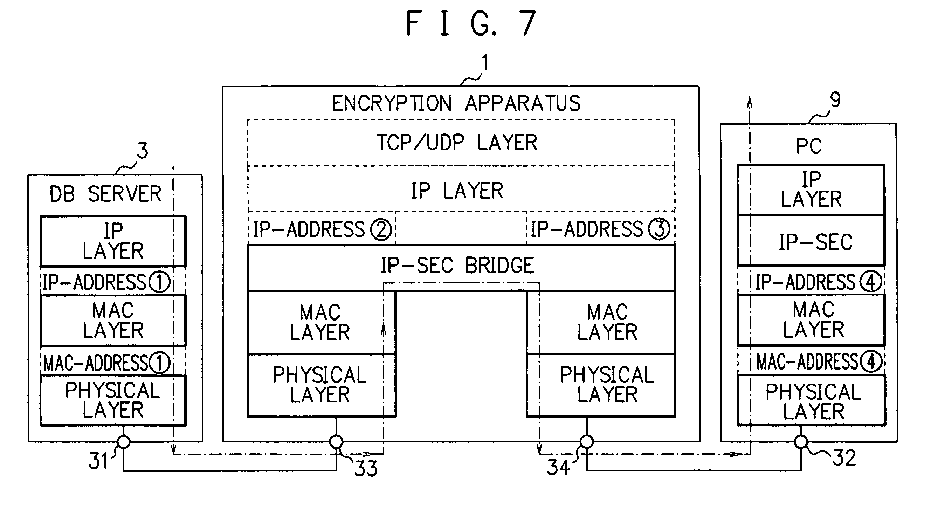

FIG. 7 shows the hierarchical structure of the protocols used for the encryption apparatus 1, the DB server 3 and the PC 9 connected to the encryption apparatus 1 (which are used in the encryption system shown in FIG. 3). In the example shown in FIG. 7, the laptop PC 9 is provided with the encryption program, and the DB server 3 is provided with NO encryption program. (This means that the laptop PC 9 has IP-Sec, and the DB server 3 has no IP-Sec.) The encryption apparatus 1 of this embodiment is provided between the DB server 3 and the laptop PC 9. The example in FIG. 7 shows a case where the DB server 3 sends data stored therein to the encryption apparatus 1, and then the encryption apparatus 1 encrypts the received data before retransmitting it to the PC 9.

As shown in FIG. 7, the DB server 3 and the PC 9 have ports 31 and 32, respectively. Further, the encryption apparatus 1 in FIG. 7 is designed so as to function as a relay device with two ports 33 and 34. In the encryption apparatus 1, the physical layer and the MAC layer (data link layer) are provided for each of the ports 33 and 34. In addition, for the ports 33 and 34, the IP-Sec (encrypting/decrypting capability), the IP layer (network layer) and the TCP/UDP layer (transport layer) are provided as common layers. As a result of this arrangement, the encryption apparatus 1 of this embodiment is characterized in that the IP-Sec serves as a bridge which links the two ports 33 and 34.

In this embodiment, the term "bridge" indicates a function of sending data just as it is (which has inputted therein via one of the ports and then on which the encrypting or decrypting process has been performed) to another port without performing any routing process. In more detail, in the example shown in FIG. 7 data is inputted via the first port 33, and then the decrypting process is performed on the inputted data at the IP-Sec. Then, without performing on the encrypted data any routing process at the IP layer, the encrypted data (just as it is) is sent to and outputted from the second port 34. (In other words, without passing the encrypted data to the IP layer, the data after the decryption, just as it is, is sent to and outputted from the second port 34.) This manner corresponds to the above-mentioned "bridge" process. Namely, in the encryption apparatus 1 according to the present embodiment, the IP layer and the TCP/UDP layer are not used in the data transmission between the DB server 3 and the PC 9, and the data transmission process is carried out in layers lower than the IP layer.

In the example shown in FIG. 7, each data packet produced on the DB server 3 is first outputted therefrom through the MAC layer and the physical layer. The data packet outputted from the DB server 3 is then received by the encryption apparatus 1 via the first port 33. In the encryption apparatus 1, the received data packet is passed to the IP-Sec through the physical layer and the MAC layer. In the IP-Sec, the encryption process is performed on a data part of the data packet. The encrypted data packet (i.e., the data packet including the encrypted data part) is sent to the second port 34 through the MAC layer and the physical layer, and then the encrypted data packet is outputted from the second port 34.

The data packet outputted from the second port 34 of the encryption apparatus 1 is then received by the PC 9, and is passed to the IP-Sec through the physical layer and the MAC layer. In the IP-Sec at the PC 9, the encrypted data packet is decrypted, and then the decrypted data packet is passed to the application layer (not shown) through the IP layer. In this way, in spite of the fact that an encryption program is not installed on the DB server 3, data can be transmitted in the form of encrypted data to the PC 9.

In this embodiment, the IP layer and the TCP/UDP layer on the encryption apparatus 1 are used when inputting various information for the encryption/decryption therein. In detail, various information such as the following information (A) - (E) is inputted using the IP layer and the TCP/UDP layer, so that the setting of the encryption apparatus 1 for the encrypted-data communications is completed.
(A) Information for instructing the encrypting/decrypting process: This information instructs to perform data communications in the encryption manner when communicating between predetermined terminals, and also instructs to perform data communications in the non-encrypted manner when communicating between the other terminals.
(B) Information for instructing to discard data packets: This information instructs to discard data packets, when data packets to be communicated between predetermined terminals have been received.
(C) Information for instructing a security level of the encryption when performing data encryption.
(D) Information for instructing time when data encryption is to be performed.
(E) Information for encryption keys.

The setting information as described above is stored in a memory with the bridge function of the IP-Sec. When controlling the encrypting/decrypting process and other processes, the IP-Sec compares the setting information stored in the memory with header information (i.e., a source IP address and a destination IP address) that is included in a data packet inputted via the port 33 (34).

As described above, in the IP-Sec, the encryption apparatus 1 of this embodiment performs the encryption/decryption process on data that has been inputted via one of the ports. Further, the encryption apparatus 1 sends the encrypted/decrypted data just as it is to another port without passing this data to the IP layer (i.e., without performing any routing process). This makes it possible for the encryption apparatus 1 to operate with no IP address during data communications. This means that the encryption apparatus 1 can perform the data encryption/decryption during data communications, in spite of the fact that it has no IP address. Therefore, according to the present invention, the encryption apparatus 1 is free of the laborious setting operation for an IP address.

Further, for the reasons described above, even when the encryption apparatus 1 is provided between adjacent terminals, these terminals still belong to the same network. This means that there is no need for the input and output ports of the encryption apparatus 1 to have different IP addresses. Therefore, the transparency of the IP address can be maintained regardless of the connection of the encryption apparatus 1 on the network. In other words, it is not necessary to set or change IP addresses of terminals connected to the encryption apparatus 1 when connecting/removing the encryption apparatus 1 to/from the network.

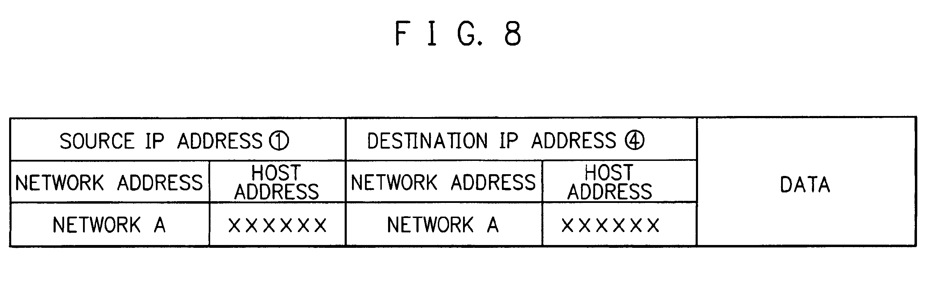

For example, in the case where the communications are directly performed between the DB server 3 and the PC 9 without connecting the encryption apparatus 1, the IP address of a data packet communicated between the DB server 3 and the PC 9 is as shown in FIG. 8. In this connection, it should be noted that, even in the case where the encryption apparatus 1 is connected between the DB server 3 and the PC 9 as shown in FIG. 7, the IP address of a data packet communicated between the DB server 3 and the PC 9 is unchanged (i.e., that is also as shown in FIG. 8). Therefore, it is not necessary to change the address settings regardless of the connection of the encryption apparatus 1.

Thus, when arranging or maintaining a network system, it is necessary only to connect/remove the encryption apparatus 1 of this embodiment to/from an appropriate point of the network system. In other words, it is needless to perform a laborious setting operation for an IP address. Therefore, the load of users is considerably reduced.

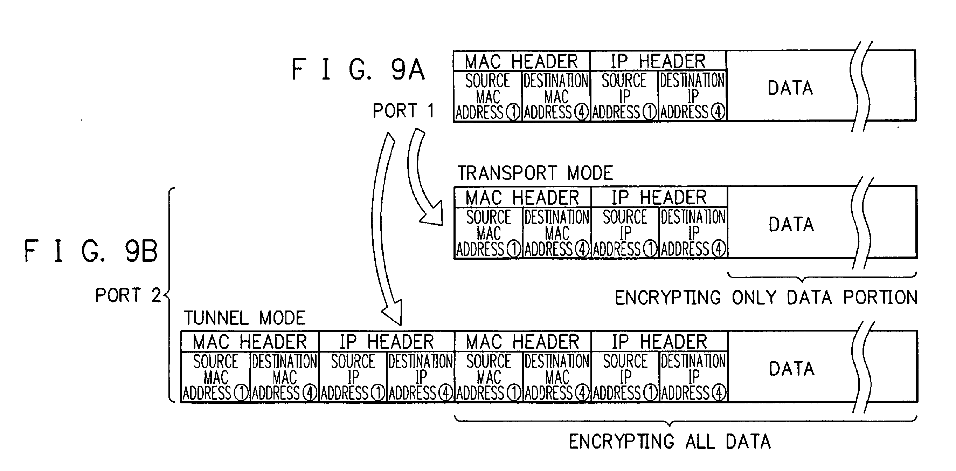

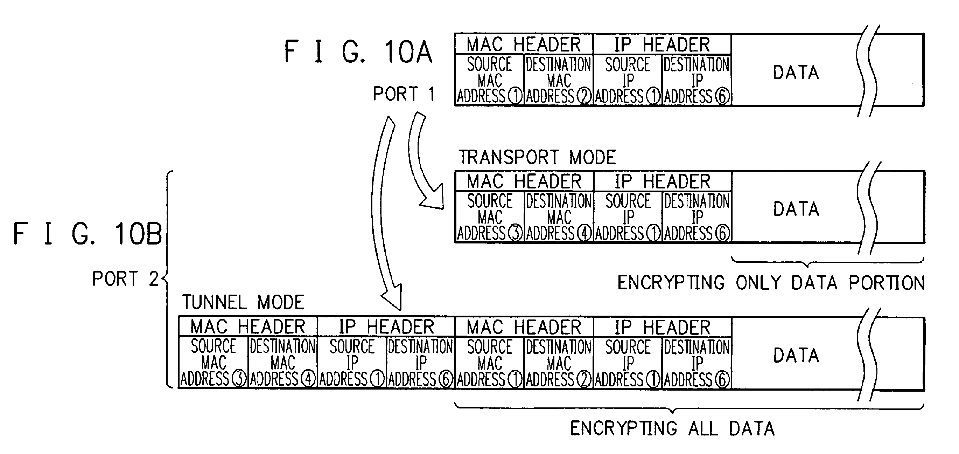

Further, according to the present embodiment, the transparency for the MAC address can also be maintained. FIG. 9 shows a data structure of a data packet in the case where the encrypted apparatus 1 performs the encryption on data that is to be transmitted to the PC 9 from the DB server 3. FIG. 10 is a drawing for the comparison with FIG. 9, which shows a data structure of a data packet in the case where the VPN router 103 in FIG. 1 performs the encryption on data that is to be transmitted to the PC 101 from the PC 102.

In FIGS. 9 and 10, FIGS. 9A and 10A show the data packets received with the first ports 33 and 107, respectively. Further, FIGS. 9B and 10B show the data packets to be retransmitted from the second ports 34 and 108, respectively. In this connection, the IP-Sec operates in two modes of a transport mode and a tunnel mode. In the transport mode, the encryption is performed only on a data part of a data packet. On the other hand, in the tunnel mode, the encryption is performed on entire of a data packet, and then new header information is added to the encrypted data packet. In FIGS. 9B and 10B, the data packet to be transmitted from the second port is shown in the two modes.

As clearly shown in FIG. 9, according to the present embodiment, not only the IP addresses, but also the MAC addresses are NOT different between the data packet received with the first port 33 and the data packet to be transmitted from the second port 34. This means that in the example shown in FIG. 9, transparency for the MAC address is maintained. That is, the encryption apparatus 1 according to the present embodiment merely passes the data inputted from one port to another port except having the IP-Sec and performing the encrypting/decrypting process with the IP-Sec. Therefore, even when communicating a data packet which has no MAC address, the encrypted apparatus can relay the data packet.

In the above-mentioned embodiment, the IP layer is used as an example of a network layer which is the third layer of the OSI reference model. However, this invention is not limited to this example, and an IPX (Internetwork Packet exchange) layer which is a protocol used on the network OS produced by Novell, inc. may be used for the network layer, instead of the IP layer. Alternatively, any other protocol may also be used, as long as it can cooperate with the IP-Sec.

The above-mentioned embodiments of the present invention are a few of examples of this invention, and the scope of invention is not limited to them. Therefore, various modifications and changes can be made without departing from the spirit and the scope of the invention.

According to the present invention described above, the encryption apparatus is provided with encryption/decryption means for performing an encrypting/decrypting process on data to terminate encryption-based security between the encryption apparatus and a terminal having an encrypting capability. By connecting the encryption apparatus between terminals via a network, it becomes possible for an in-house LAN having terminals where installation of a dedicated encryption program is impossible to utilize encryption for data communications inside the LAN. As a result, risks of interception and change of confidential information inside the LAN by unauthorized entries and attacks form the outside are reduced.

Further, according to the present invention, the encryption apparatus outputs encrypted or decrypted data without passing the data to a network layer in which routing between networks is controlled. This feature makes it possible for the encryption apparatus to perform data communications without no IP address. Furthermore, since there is no need for the input and output ports of the encryption apparatus to have different IP addresses, the transparency of the IP address of the encryption apparatus can be maintained regardless of the connection thereof on a network. In addition, it is not necessary to set or change IP addresses of terminals connected to the encryption apparatus when connecting/removing the encryption apparatus to/from the network. This allows terminals inside an in-house LAN to perform encrypted data communications without any laborious operations such as an address setting operation.

### INDUSTRIAL UTILIZATION

The present invention is preferably used in allowing an in-house LAN having terminals where installation of a dedicated encryption program is impossible to utilize encryption for data communications inside the LAN, so that risks of interception and change of confidential information inside the LAN by unauthorized entries and attacks form the outside are reduced.

Further, the present invention is also used in allowing terminals inside an in-house LAN to perform encrypted data communications without any laborious operations such as an address setting operation.

## Claims

1. An encryption apparatus, comprising:
a plurality of ports to at least one of which a terminal having an encrypting capability can be directly or indirectly connected;
encryption/decryption means for performing an encrypting process and a decrypting process on data to terminate encryption-based security between the terminal having the encrypting capability; and
bridge means for allowing data, which has been received with one of the plurality of ports and then on which the encrypting or decrypting process has been performed, to be outputted as it is from another port without being performed any routing process.

2. The encryption apparatus according to claim 1,
wherein the encryption/decryption means performs the encrypting process and the decrypting process on data, so that the encryption apparatus receives and retransmits data in the form of encrypted data from and to the terminal having the encrypting capability, and the encryption apparatus receives and retransmits the data in the form of non-encrypted data from and to the terminal having no encrypting capability.

3. An encryption apparatus, comprising:
a plurality of ports to at least one of which a terminal having an encrypting capability can be directly or indirectly connected;
encryption/decryption means for performing an encrypting process or a decrypting process on data which has been received with one of the plurality of ports and then has passed through a physical layer and a data link layer; and
bridge means for passing the encrypted or decrypted data to the data link layer and the physical layer without passing said data to a network layer in which routing between networks is controlled, and then sending said data to another port so as to be outputted from said port.

4. The encryption apparatus according to claim 3, further comprising setting information storage means for storing setting information for controlling the encrypting process and the decrypting process,
wherein the encryption/decryption means controls the encrypting process and the decrypting process by comparing the setting information stored in the setting information storage means with header information of a data packet of the data received with one of the plurality of ports.

5. An encrypting method for performing an encrypting process and a decrypting process using an encryption apparatus, the apparatus having a plurality of ports to at least one of which a terminal having an encrypting capability can be directly or indirectly connected, the method comprising the steps of:
performing the encrypting or decrypting process on data which has been received with one of the plurality of ports and then has passed through a data link layer and a physical layer; and
outputting the encrypted or decrypted data from another port through the data link layer and the physical layer, without passing said data to a network layer in which routing between networks is controlled.

6. An encryption system, comprising:
an encryption apparatus according to claim 1; and
a terminal having an encrypting capability which can be connected to the encryption apparatus through a wireless or cable network.

7. An encryption system, comprising:
a terminal having an encrypting capability;
a terminal having no encrypting capability; and
an encryption apparatus according to claim 2 which can be connected between the terminal having the encrypting capability and the terminal having no encrypting capability through a wireless or cable network.
